(19) Europäisches Patentamt
European Patent Office
Office européen des brevets

(11) EP 4 567 410 A1

(12) **EUROPEAN PATENT APPLICATION**
published in accordance with Art. 153(4) EPC

(43) Date of publication:
**11.06.2025 Bulletin 2025/24**

(21) Application number: **23849892.7**

(22) Date of filing: **19.07.2023**

(51) International Patent Classification (IPC):
***G01N 21/75*** *(2006.01)* ***G01N 35/02*** *(2006.01)*

(52) Cooperative Patent Classification (CPC):
**G01N 21/75; G01N 35/02**

(86) International application number:
**PCT/JP2023/026449**

(87) International publication number:
**WO 2024/029337 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.08.2022 JP 2022123838**

(71) Applicant: **HITACHI HIGH-TECH CORPORATION**
**Tokyo 105-6409 (JP)**

(72) Inventors:
- **MATSUOKA, Yuya**
  **Tokyo 105-6409 (JP)**
- **ANDO, Takahiro**
  **Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **AUTOMATIC ANALYSIS DEVICE**

(57) An automatic analyzer is provided which can perform highly reliable analysis even under a situation that the quantity of emitted light changes, while suppressing size enlargement of and deterioration in processing capacity of the device. The automatic analyzer comprises a container holder section capable of holding a plurality of containers storing reaction liquid produced by mixing sample and reagent, a light source irradiating light, an optical receiver receiving the light irradiated by the light source, and a control section performing measurement related to the light from a signal outputted from the optical receiver, the containers being disposable containers, and the control section correcting a measured value related to light irradiated to a position where the containers are held in the container holder section, on the basis of a measured value related to light irradiated to a position where the containers are not held in the container holder section.

FIG. 5

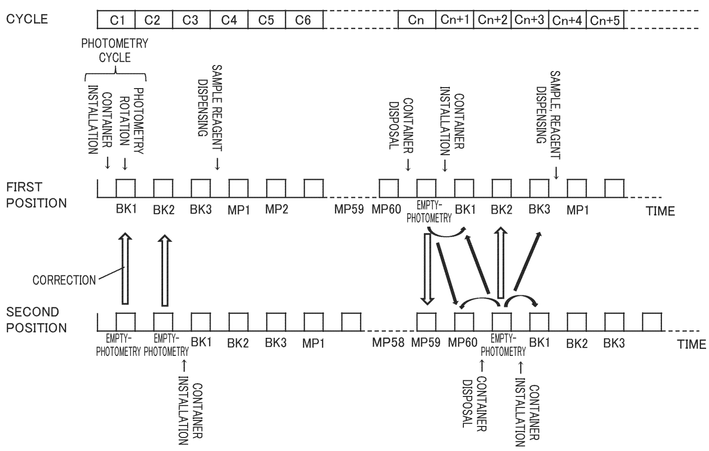


EP 4 567 410 A1

## Description

### Technical Field

This invention relates to an automatic analyzer.

### Background Art

In an automatic biochemical analyzer that uses absorbance to measure component concentrations in a specimen, the amount of waiting time from when the device is powered on until the quantity of light emitted from a light source becomes stable. The quantity of light emitted from the light source may change depending on temperature variations in the environment where the device is installed. Here, Patent Literature 1 discloses a technology to measure and correct a reference quantity of light produced in a state of absence of a reaction container caused by establishing a light path other than a position in which the reaction container is held, and/or by arranging a position in which the reaction container is held and a position in which no reaction container is held in an alternating order.

### Citation List

### Patent Literature

Patent Literature 1: Japanese Unexamined Patent Application Publication No. 2007-322246

### Summary of Invention

### Technical Problem

According to Patent Literature 1, because a different light path is established between adjacent container holding positions, this causes size enlargement of the device and deterioration in processing capacity of the device. Further, because of the automatic analyzer that cleans the reaction containers after used in analysis in order to reuse them, if the position in which no reaction container exists alternatingly, the cleaning is difficult for an ordinary cleaning mechanism that cleans a plurality of reaction containers simultaneously.

An object of the present invention is to provide an automatic analyzer which can perform highly reliable analysis even under a situation that the quantity of emitted light changes, while suppressing size enlargement of the device and deterioration in processing capacity of the device.

### Solution to Problem

In order to achieve the above object, an automatic analyzer includes: a container holder section capable of holding a plurality of containers storing reaction liquid produced by mixing sample and reagent; a light source irradiating light; an optical receiver receiving the light irradiated by the light source; and a control section performing measurement related to the light from a signal outputted from the optical receiver, the containers being disposable containers, and the control section correcting a measured value related to light irradiated to a position where the containers are held in the container holder section, on the basis of a measured value related to light irradiated to a position where the containers are not held in the container holder section.

### Advantageous Effects of Invention

According to the present invention, it is possible to provide an automatic analyzer which can perform highly reliable analysis even under a situation that the quantity of emitted light changes, while suppressing size enlargement of and deterioration in processing capacity of the device.

### Brief Description of Drawings

FIG. 1 is a top view showing an entire configuration of an automatic analyzer.
FIG. 2 is a view showing an optical system of the automatic analyzer.
FIG. 3A is a horizontal sectional view of an incubator.

FIG. 3B is an A-A sectional view of FIG. 3A.

FIG. 4 is a sectional view showing a situation where a reaction container is inserted in a certain container-insertion hole of the incubator.

FIG. 5 is a time chart showing operations performed with respect to a first position and second position in the incubator.

FIG. 6 is a graph indicating a transition of a light quantity obtained by reaction liquid measurement, a light quantity obtained by empty-photometry, and a light quantity after correction of the reaction liquid measurement. Description of Embodiments

Embodiments of the invention will now be described with reference to the drawings.

FIG. 1 is a top view showing an entire configuration of an automatic analyzer. A plurality of reaction containers 2 is arranged circumferentially on the outer peripheral side of an incubator 1 (container holder section) which is driven to rotate a distance corresponding to a predetermined number of reaction containers in a single cycle by a driving mechanism which is not shown. The reaction containers 2 are used in common for all reactions and are disposable.

A plurality of reagent bottles 4 and sample containers 5 are capable of being circumferentially placed on the inside of a reagent and sample common disk 3 (hereinafter referred to as a common disk). In the embodiment, the reagent bottles 4 are located in a more inner peripheral area than the sample containers 5 are located in. However, the sample containers 5 may be located in a more inner peripheral area than the reagent bottles 4 are located in, or alternatively the reagent bottles 4 and the sample containers 5 may be arranged regardless of the inner peripheral area and the outer peripheral area. In another way, the reagents and the samples may be arranged on independent disks.

A first dispensing mechanism 8 and a second dispensing mechanism 9, which are rotatable and vertically movable, are placed between the incubator 1 and the common disk 3, and each dispensing mechanism includes a dispensing nozzle. A pump 10 for first dispensing mechanism is connected to the dispensing nozzle of the first dispensing mechanism 8, while a pump for second dispensing mechanism 11 is connected to the dispensing nozzle of the second dispensing mechanism 9.

The first dispensing mechanism 8 and the second dispensing mechanism 9 are used respectively in tests in different analysis processes. If the first dispensing mechanism 8 is intended for biochemistry and the second dispensing mechanism 9 is intended for immunity, in the second dispensing mechanism 9 for immunity, a dispensing tip 18 is used because of great necessity to prevent contamination between samples.

The first dispensing mechanism 8 dispenses a sample and reagent for a biochemical test. The second dispensing mechanism 9 dispenses a sample and reagent for an immunological test. Both the first dispensing mechanism 8 and the second dispensing mechanism 9 are able to access a sample which is subject to both the biochemical test and the immunological test.

The dispensing nozzle moves horizontally along an arc around the rotational axis. In the horizontal trajectory of the dispensing nozzle, there exist: a reagent aspiration position 6 and a sample aspiration position 7 which are on the common disk 3; a first dispensing position and a second dispensing position which are on the incubator 1; and cleaning tanks for cleaning the dispensing nozzles (a first dispensing-nozzle cleaning tank 12, a second dispensing-nozzle cleaning tank 13). The second dispensing mechanism 9 uses the dispensing tip 18, and therefore in its trajectory, there also exist a dispensing tip-mounting position 22 and a dispensing tip-disposal position 23.

The first dispensing mechanism 8 and the second dispensing mechanism 9 are arranged to prevent interference between mechanisms and trajectories of the dispensing nozzles. The sample aspirated from the sample container 5 at the sample aspiration position 7, and the reagent aspirated from the reagent bottle 4 at the reagent aspiration position 6 are discharged into the reaction container 2 at the first dispensing position or the second dispensing position. Then, the sample and the reagent in the reaction container 2 are mixed through the aspiration-discharging operation that is performed in the reaction container 2 by the dispensing nozzle or the dispensing tip 18 mounted on the dispensing nozzle.

The reaction container 2 containing a reaction liquid with a mix of the sample and the reagent is managed at a predetermined temperature by the incubator 1 so as to promote the reaction. Around the incubator 1, a spectrophotometer 15 for the biochemical test is placed. The spectrophotometer 15 disperses and detects transmitted light which is obtained by irradiation of light to the reaction liquid with the mix of the sample and the reagent, in order to measure the absorbance of the reaction liquid. The structure of the spectrophotometer 15 will be described later in detail with reference to FIG. 2.

A detection mechanism 16 for a biochemical test measures a reaction liquid obtained by reacting a specified length of time by the incubator 1. In the immunological tests, some ways to detect a labeled substance are based on the principle of electrochemiluminescence or chemiluminescence, in which a structure and physical properties of each suitable label and detection region are selected and a photomultiplier is used as a detector to measure the quantity of emitted light resulting from a luminescent reaction of the label.

A transport mechanism 17 moves the disposable reaction container 2 loaded on a reaction container tray 20 to the incubator 1, and/or the transport mechanism 17 discards the reaction container 2 to the discard box 21 after the absorbance has been measured for the reaction container 2 at the incubator 1. The transport mechanism 17 also moves, to the detection mechanism 16, the reaction container 2 containing the reaction liquid obtained after a predetermined amount of time of reaction by the incubator 1, and/or the transport mechanism 17 discards, to the discard box 21, the reaction container 2 after the completion of the measurement at the detection mechanism 16. Further, the transport mechanism 17 performs the operation of moving the dispensing tip 18 loaded on a dispensing tip tray 19 to a dispensing tip-mounting position 22.

A control section 24 is connected to each mechanism (the connection manner is not shown) to control the rotation operation of the incubator 1, the rotation operation of the common disk 3, the operation of the dispensing nozzle, the operation of aspirating/discharging liquid, and/or the like.

FIG. 2 is a view showing an optical system of the automatic analyzer. As illustrated in FIG. 2, the optical system of the automatic analyzer includes a light source 101, a collective lens 102, an illumination slit 103, a reaction container 2, a photoreception slit 105, a concave diffraction-grating 106, and an optical receiver 107. In the embodiment, an LED is used as the light source 101. The light from the light source 101 is collected by the collective lens 102. The illuminative range is limited by the illumination slit 103. Then, after entering the reaction container 2, the light goes out with a quantity of light corresponding to the absorbance of the reaction liquid 104 in the reaction container 2. With a photoreceptive range limited by the photoreception slit 105, the outgoing light is dispersed by the concave diffraction-grating 106, and then received by the optical receiver 107. The quantity of light is converted into an electric signal for each wavelength of the light received at the optical receiver 107, and based on the electric signal output from the optical receiver 107, the control section 24 performs the measurement of absorbance.

FIG. 3A is a horizontal sectional view of an incubator, and FIG. 3B is an A-A sectional view of FIG. 3A. The incubator 1 has a plurality of container insertion holes 62 circumferentially arranged at predetermined intervals therein, the reaction container 2 being inserted into each container insertion hole 62. It is noted that 12 container insertion holes 62 are shown circumferentially in FIG. 3A, but in actuality, 64 container insertion holes 62 are formed in the top face of the incubator 1 as illustrated in FIG. 1. It is noted that, of the 64 container insertion holes 62, the 32 container insertion holes 62 are for holes for the biochemical test and the other 32 container insertion holes 62 are for holes for the immunological test.

For the purpose of playing a role in raising and maintaining the temperature of the reaction liquid in the reaction container 2 to a predetermined temperature, the incubator 1 is desirably formed of a disk-shaped metal. However, the incubator 1 may have any shape other than a disk shape and/or may be formed of light-shielding materials other than metal. In the incubator 1 mainly formed of light-shielding materials in this way, an incident-side slit 63 and an output-side slit 64 are formed radially as a light path along which the light from the light source 101 passes through the reaction container 2 to reach the optical receiver as illustrated in FIG. 3B. It is noted that, no slit is formed in the container insertion hole 62 into which only the reaction container 2 for the immunological test without measurement of absorbance is inserted, whereby the temperature control performance may be improved and/or the influence of light irradiation on the immunological test reagent may be eliminated.

FIG. 4 is a sectional view showing a situation where a reaction container is inserted in a certain container-insertion hole of the incubator. The light emitted from the light source 101 and then traveling through the incident-side slit 63 passes though the reaction liquid 104 in the reaction container 2, so that light of a quantity of light corresponding to the absorbance of the reaction liquid 104 goes out. The outgoing light travels through the output-side slit 64, and then enters the spectrophotometer 15 to be dispersed in order to measure the quantity of light for each wavelength. Here, because a cylinder portion of the reaction container 2 is firmly attached to the incubator 1, heat is transferred from the incubator 1 controlled to a constant temperature, to the reaction container 2 and the reaction liquid 104. Thus, this causes the temperature of the cylinder portion of the reaction container 2 to rise swiftly to the same temperature as that of the incubator 1.

The operation of the automatic analyzer where the absorbance of the reaction liquid is measured as a biochemical test will be described below in detail with reference to FIG. 5. FIG. 5 is a time chart showing operations performed with respect to a first position and second position in the incubator.

First, the initial operation (reset operation) is performed on each mechanism by user's instruction to start. At this time, assume that no reaction container 2 is held in any of 32 container holding positions for the biochemical test in the incubator 1. It is noted that a container holding position as used herein is indicative of a circumferential position of the incubator 1 in form corresponding to a place of the container insertion hole 62, and particularly, refers to a portion serving as a light irradiated region when the reaction container 2 is inserted into the container insertion hole 62 to be held by the container holder section.

In a first cycle (cycle C1), the control section 24 controls the transport mechanism 17 to move a reaction container 2 before use from the reaction container tray 20 and then to install the reaction container 2 in a first position located in a transport position of a plurality of container holding positions of the incubator 1. Thereafter, the incubator 1 is rotated. At this time, because the incubator 1 is rotated one turn or more, all the container holding positions pass in front of a photometry section (light source 101), so that the light quantity of the transmitted light obtained by irradiating each container holding position is measured by the spectrophotometer 15. A first blank measurement (BK1) is performed on the first position where the reaction container 2 is held, and an empty-photometry is performed on a second position where the reaction container 2 is not held and/or on other container holding positions. A measured value obtained through the first blank measurement performed on the first position is corrected by a measured value obtained through the empty-photometry in this cycle performed on the second position. It is noted that because, in this cycle, the empty-photometry is performed on a plurality of container holding positions, an average value of the measured values of the empty-photometry may be used for the correction of the measured value in the first position. Alternatively, a container holding position of the plurality of container holding positions on which the empty-photometry is performed is located closest to the first position in terms of irradiation timing (timing for passing the photometry section), and the measured value of the empty-photometry in this container holding position may be used for the correction of the measured value in the first position.

The blank measurement as used herein refers to a light quantity measurement performed in a state where a reaction container 2 is present in the container holding position but there is no containing reaction liquid inside the reaction container 2, which is a measurement for making a correction for contamination and/or individual variations of the disposable reaction containers 2. In the embodiment, the blank measurement is performed on the same reaction container 2 for three cycles continuously, and an average value of the three measured values is used for the correction. It is noted that, because the automatic analyzer according to the embodiment uses the disposable reaction containers 2 as described above, and therefore includes no cleaning mechanism to discharge and aspirate water and/or detergent into the reaction container 2, the light quantity measurement with the reaction container 2 containing water (water blank measurement) is not performed.

The empty-photometry as used herein refers to a light quantity measurement performed in the absence of the reaction container 2 in the container holding position, which is a measurement for cancelling changes in the quantity of emitted light (issue intensity) of the light source 101. The measured value in the empty-photometry is the quantity of emitted light itself of the light source 101, and has the potential of changing as the cycle progresses. Therefore, a measured value of a blank measurement and/or a later-described reaction liquid measurement in each cycle is corrected by measured values of empty-photometry measured in other container holding positions in the same cycle.

In a second cycle (cycle C2), the control section 24 rotates the incubator 1 in order to perform a second blank measurement (BK2) on the first position and perform empty-photometry on the second position and other container holding positions. A measured value obtained through the second blank measurement performed on the first position is also corrected by measured values obtained through the empty-photometry in this cycle performed on the second position and the other container holding positions.

In a third cycle (cycle C3), the control section 24 controls the transport mechanism 17 to move a new reaction container 2 before use from the reaction container tray 20 and then to install the reaction container 2 in the second position located in a transport position of a plurality of container holding positions of the incubator 1, and then the incubator 1 is rotated. By rotating the incubator 1, a third blank measurement (BK3) is performed on the first position, and a first blank measurement (BK1) is performed on the second position. In this cycle, because the empty-photometry is performed in other container holding positions where no reaction container 2 is held, the measured values in the first position and the second position are corrected based on the measured values obtained through the empty-photometry.

In a fourth cycle (cycle C4), the control section 24 controls the first dispensing mechanism 8 to dispense a sample and reagent into the reaction container 2 located in the first position, and then the incubator 1 is rotated. By rotating the incubator 1, a first reaction liquid measurement (MP1) is performed on the first position, and a second blank measurement (BK2) is performed on the second position. In this cycle, because the empty-photometry is performed in other container holding positions where no reaction container 2 is held, the measured values in the first position and the second position are corrected based on the measured values obtained through the empty-photometry.

The reaction liquid measurement as used herein refers to a light quantity measurement performed in a state where a reaction container 2 is in the container holding position and the reaction container 2 contains reaction liquid, and the reaction liquid measurement is performed, e.g., 60 times in total. It is noted that in the embodiment because of one cycle of 10 seconds, ten minutes are taken to complete the absorbance measurement of the reaction liquid obtained from a single sample. In this regard, the number of reaction liquid measurements and the amount of time required for one cycle are not limited to above and vary depending on the number of container holding positions.

After that, in a nth cycle (cycle Cn), the control section 24 controls the transport mechanism 17 to move the reaction container 2 after use from the first position located in the transport position to the discard box 21 for disposal, and then the incubator 1 is rotated. By rotating the incubator 1, the empty-photometry is performed on the first position and a 59th reaction liquid measurement (MP59) is performed on the second position. A measured value of the empty-photometry on the first position is used to correct a measured value in this cycle in the second position and other container holding positions.

In a n+1th cycle (cycle Cn+1), the control section 24 controls the transport mechanism 17 to move a new reaction container 2 before use from the reaction container tray 20 and then to install the reaction container 2 in the first position located in a transport position, and then the incubator 1 is rotated. By rotating the incubator 1, a first blank measurement (BK1) is performed on the first position, and a 60th reaction liquid measurement (MP60) is performed on the second position. In this cycle, there is no container holding position on which the empty-photometry is performed, a measured value of empty-photometry in another cycle is used to correct a measured value in this cycle.

For example, the measured value of the first blank measurement (BK1) on the first position in this cycle is corrected by use of any one of a measured value of the empty-photometry on the first position in the preceding nth cycle, a measured value of the empty-photometry on the second position in the subsequent n+2th cycle, and an intermediate value of the measured values. Likewise, the measured value of the 60th reaction liquid measurement (MP60) on the second position in this cycle is also corrected by use of any one of a measured value of the empty-photometry on the first position in the preceding nth cycle, a measured value of the empty-photometry on the second position in the subsequent n+2th cycle, and an intermediate value of the measured values. It is noted that the correction of the measured value in the cycle in the absence of empty-photometry (without empty-photometry) may be made using a value found by linear interpolation using a measured value of empty-photometry in the most recent cycle (with empty-photometry), a measured value of empty-photometry in the next most recent cycle (with empty-photometry), and/or the like. Also, any method other than linear interpolation may be used for interpolation.

In a n+2th cycle (cycle Cn+2), the control section 24 controls the transport mechanism 17 to move the reaction container 2 after use from the second position located in the transport position to the discard box 21 for disposal, and then the incubator 1 is rotated. By rotating the incubator 1, the second blank measurement (BK2) is performed on the first position and empty-photometry is performed on the second position. In this cycle, a measured value of the empty-photometry on the second position is used to correct a measured value in this cycle in the first position and other container holding positions. The measured value of the empty-photometry on the second position in this cycle is also used for correction of a measured value in the preceding n+1th cycle, and/or a measured value in the subsequent n+3th cycle.

A description will now be given of a calculation method when the quantity of light and the absorbance are corrected. It is noted that a method to correct the blank light quantity measured when the reaction container is empty to obtain equivalent to the blank light quantity when water is contained is omitted.

Initially, assume that $I_0$ is a light quantity obtained through blank measurement immediately after a certain reaction container 2 is held in the incubator 1, and assume that $S_0$ is a light quantity obtained through empty-photometry (empty Pos light quantity) performed at another container holding position in the same cycle as the blank measurement in question. Further, assume that $I_x$ is a light quantity obtained through an Xth reaction liquid measurement of the reaction container 2 in question, and $S_x$ is a light quantity obtained through empty-photometry (empty Pos light quantity) performed at another container holding position in the same cycle as the reaction liquid measurement in question.

Thus, a corrected light quantity $I'_x$ of an Xth reaction liquid measurement of the reaction container 2 in question is expressed by the following "Equation 1".

[Mathematical expression 1]

$$I'_x = I_x \frac{S_0}{S_x}$$

(Equation 1)

Further, assuming that $A_x$ is an absorbance obtained through the Xth reaction liquid measurement of the reaction container 2 in question, a corrected absorbance $A'_x$ of the Xth reaction liquid measurement of the reaction container 2 in question is expressed by the following "Equation 2" or "Equation 3".

[Mathematical expression 2]

$$A'_x = \log\left(\frac{I_0}{I'_x}\right)$$

(Equation 2)

[Mathematical expression 3]

$$A'_x = A_x + \log\left(\frac{S_x}{S_0}\right)$$

(Equation 3)

FIG. 6 is a graph indicating a transition of a light quantity obtained by reaction liquid measurement, a light quantity obtained by empty-photometry, and a light quantity after correction of the reaction liquid measurement. As illustrated in FIG. 6, the reaction liquid measurement is performed in each cycle, whereas the empty-photometry is performed once in two cycles. It is also seen that the quantity of light of the empty-photometry (see symbol ■ in FIG. 6) changes (increases) as the number of reaction liquid measurements is increased, i.e., as time (cycle) passes. This is because the quantity of light emitted from the light source is not stable during a predetermined amount of time from when the automatic analyzer is powered on. As a result, it is seen that the measured values of the reaction liquid measurement (see symbol • in FIG. 6) are influenced by changes in the quantity of emitted light to change (increase) as illustrated in FIG. 6.

Therefore, in the embodiment, the measured value of the empty-photometry is used to correct the measured value of the reaction liquid measurement.

As a result, it is seen that, even if the quantity of emitted light changes, the quantity of light after correction of the reaction liquid measurement (see symbol ▲ in FIG. 6) takes relatively stable values. Stated another way, even in the situation where the quantity of light emitted from the light source tends to change, without waiting until the quantity of emitted light becomes stable, the reaction liquid measurement is enabled to be performed while the influence of changes in the quantity of emitted light is minimized. Thus, the automatic analyzer is made more reliable.

In particular, where an LED is used for the light source 101, as compared with a halogen lamp, the light source 101 is sensitive to the temperature of an environment where the automatic analyzer is installed, so that the quantity of emitted light tends to change. However, by correcting the measured values as described in the embodiments, a decrease in reliability may be diminished.

As described above, in the automatic analyzer according to the embodiment, the disposable reaction container 2 is used. Using a state where the container holding position is empty, which occurs in a time from when a reaction container 2 after use is discarded until when a reaction container 2 before use is installed, the photometry is performed, and the correction is performed based on the values of the photometry. Therefore, an area between adjacent container holding positions is covered with a light shielding material, and even if a dedicated light path for empty-photometry is not easily established in the incubator 1 itself, empty-photometry is enabled and thus the accuracy of analytical results may be maintained. Also, if the dedicated light path for empty-photometry is not established in the incubator 1 itself, then this makes it possible to prevent size enlargement of and deterioration in processing capacity of the device.

The present invention is not limited to the above-described embodiments, and further includes various modifications.

For example, in the above-described embodiments, except soon after starting, the empty-photometry is performed once in two cycles, but which is not intended to be limiting. How many cycles in which the empty-photometry is performed once, i.e., how many cycles in which the reaction container 2 is installed/discarded once depends on the processing capacity of the automatic analyzer. The number of container holding positions for biochemistry in the incubator 1 is 32 in the above-described embodiments, but the number of container holding positions may be any number depending on the processing capacity of the automatic analyzer and/or the like.

There is also a possibility that the processing capacity of the automatic analyzer is reduced as compared with the above-described embodiments. However, the empty-photometry may be designed to be performed once in each cycle at all times to achieve higher correction precision. In this case, the control section controls the operation of each mechanism while scheduling such that the reaction container 2 is not held in at least one position in the container holder section.

List of Reference Signs

1: Incubator, 2: Reaction container, 3: Reagent, sample common disk, 4: Reagent bottle, 5: Sample container, 6: Reagent aspiration position, 7: Sample aspiration position, 8: First dispensing mechanism, 9: Second dispensing mechanism, 10: Pump for first dispensing mechanism, 11: Pump for second dispensing mechanism, 12: First dispensing-nozzle cleaning tank, 13: Second dispensing-nozzle cleaning tank, 15: Spectrophotometer, 16: Detection mechanism, 17: Transport mechanism, 18: Dispensing tip, 19: Dispensing tip tray, 20: Reaction container tray, 21: Discard box, 22: Dispensing tip-mounting position, 23: Dispensing tip-disposal position, 24: Control section, 62: Container insertion hole, 63: Incident-side slit, 64: Output-side slit, 101: Light source, 102: Collective lens, 103: Illumination slit, 104: Reaction liquid, 105: Photoreception slit, 106: Concave diffraction-grating, 107: Optical receiver

**Claims**

1. An automatic analyzer comprising:

   a container holder section capable of holding a plurality of containers storing reaction liquid produced by mixing sample and reagent;
   a light source irradiating light;
   an optical receiver receiving the light irradiated by the light source; and
   a control section performing measurement related to the light from a signal outputted from the optical receiver;
   the containers being disposable containers; and
   the control section correcting a measured value related to light irradiated to a position where the containers are held in the container holder section, on the basis of a measured value related to light irradiated to a position where the containers are not held in the container holder section.

2. The automatic analyzer according to claim 1, comprising

   a first photometry cycle irradiating light in a state where the containers are held at a first position of the container holder section and the containers are not held at a second position of container holder section; and
   a second photometry cycle irradiating light in a state where the containers are not held at the first position of the container holder section and the containers are held at the second position; wherein
   a measured value related to light irradiated to the first position in the first photometry cycle is corrected based on a measured value related to light irradiated to the second position in the first photometry cycle, and a measured value related to light irradiated to the second position in the second photometry cycle is corrected based on a measure value related to light irradiated to the first position in the second photometry cycle.

3. The automatic analyzer according to claim 2, comprising a transport mechanism moving the containers before their use to the container holder section and moving the containers after their use from the container holder section, wherein

   in a cycle just after the first photometry cycle, the transport mechanism moves the containers before their use to the second position, and
   in a cycle just after the second photometry cycle, the transport mechanism moves the containers before their use to the first position.

4. The automatic analyzer according to claim 3, wherein

   in the first photometry cycle, after the transport mechanism moves the container after their use from the second position, the container holder section rotates, and light is irradiated; and
   in the second photometry cycle, after the transport mechanism moves the container after their use from the first position, the container holder section rotates, and light is irradiated.

5. The automatic analyzer according to claim 1, comprising

   a cycle with empty-photometry irradiating light in a state where the containers are not held at any position of the container holder section; and
   a cycle without empty-photometry irradiating light in a state where the containers are held at any position of the container holder section, wherein
   a measured value related to light irradiated to a predetermined position in the cycle without empty-photometry is corrected based on a measured value related to light irradiated to a position where the containers are not held in the most recent cycle with empty-photometry.

6. The automatic analyzer according to claim 1, wherein
   the control section corrects a measured value related to light irradiated to a predetermined position where the containers are held, on the basis of an average value of measured values related to light irradiated to a plurality of positions where the containers are not held.

**7.** The automatic analyzer according to claim 1, wherein
the control section corrects a measured value related to light irradiated to a predetermined position where the containers are held, on the basis of a measured value related to light at a position of positions where the containers are not held and that is a position nearest to the predetermined position in terms of irradiation timing.

**8.** The automatic analyzer according to claim 1, wherein
the control section carries out controlling in such a manner as not to cause the containers to be held in at least one position of the container holder section.

**9.** The automatic analyzer according to claim 1, wherein
the container holder section is made of a light shielding material and the containers are inserted into a plurality of holes provided at predetermined intervals.

FIG. 1

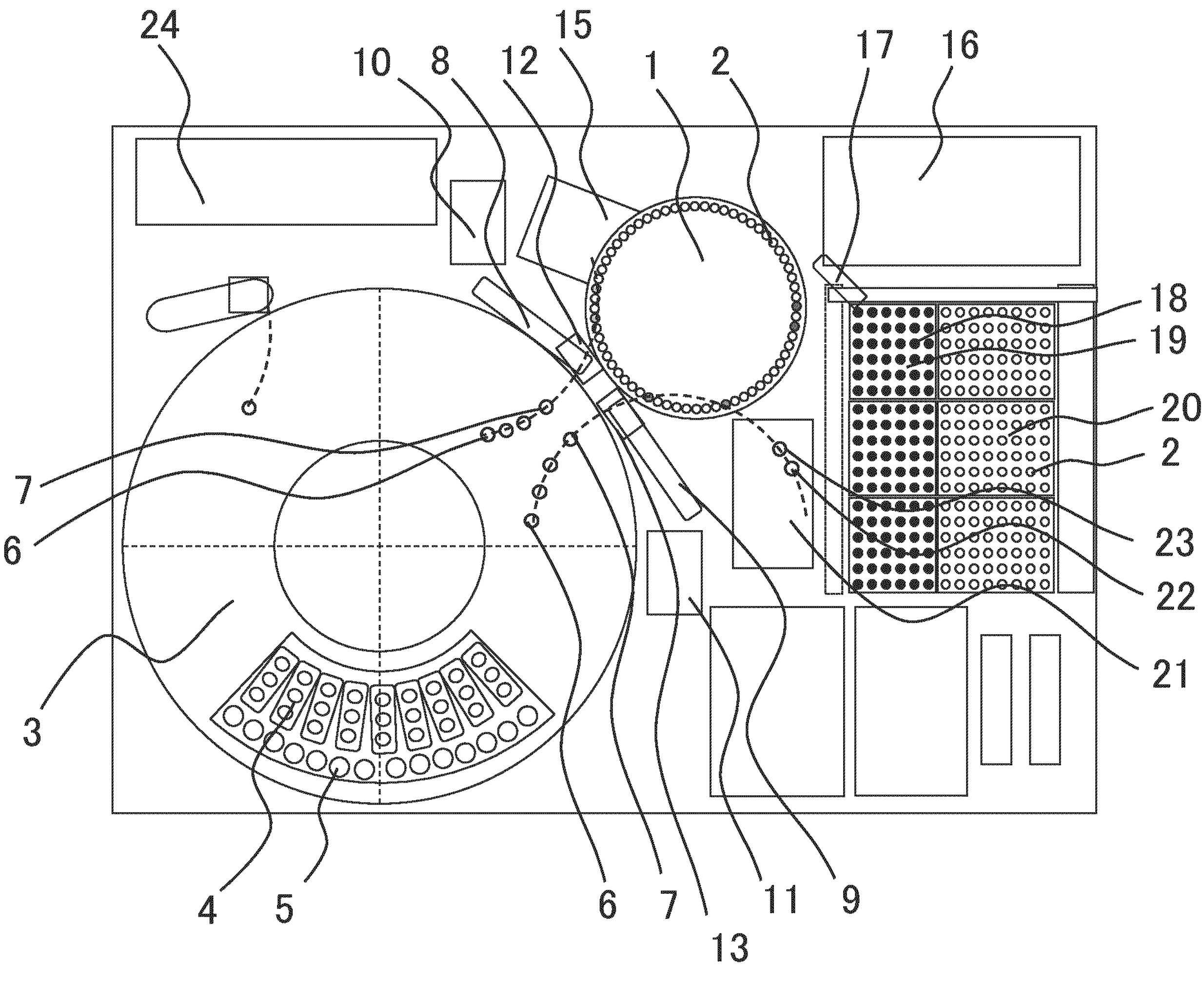

FIG. 2

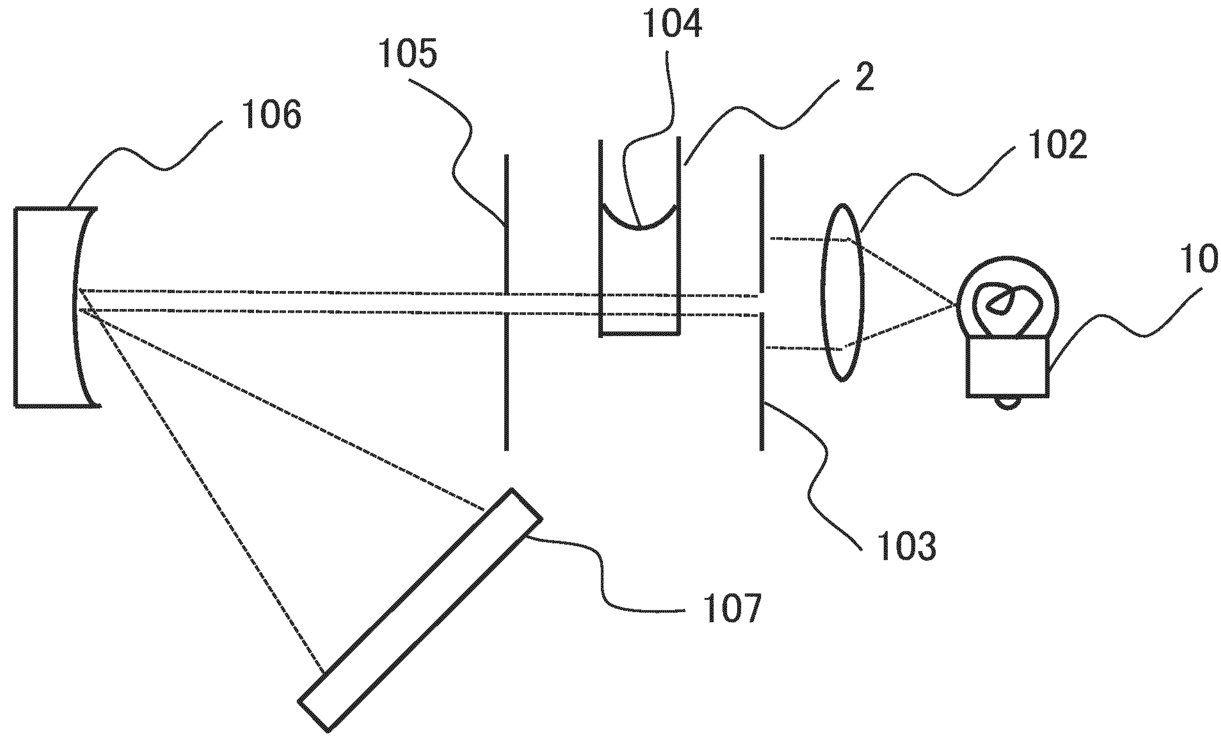

FIG. 3A

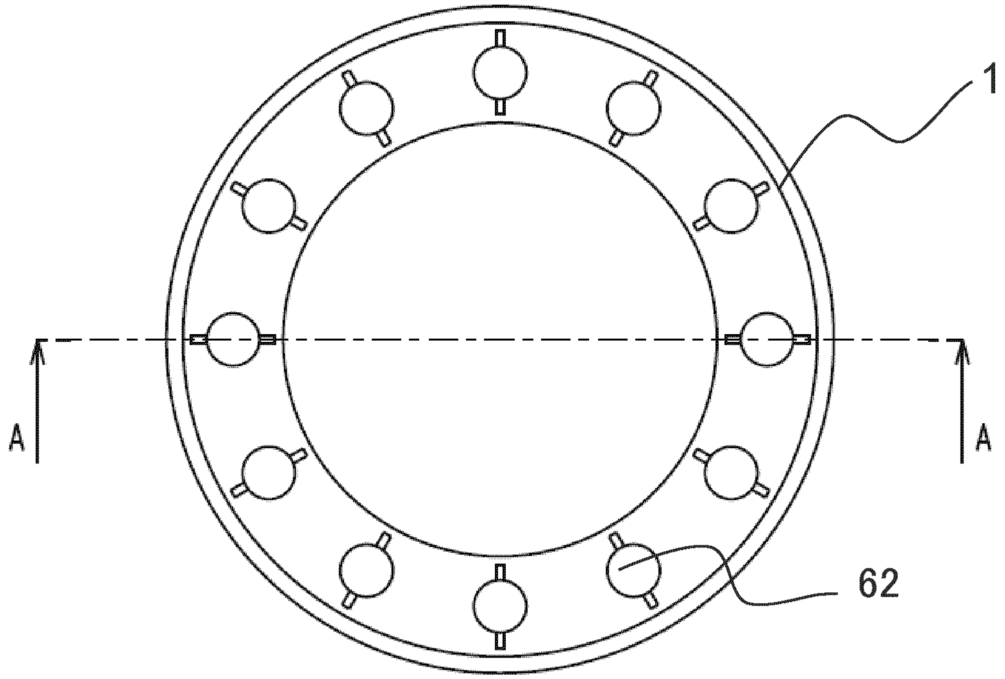


FIG. 3B

A-A CROSS SECTION

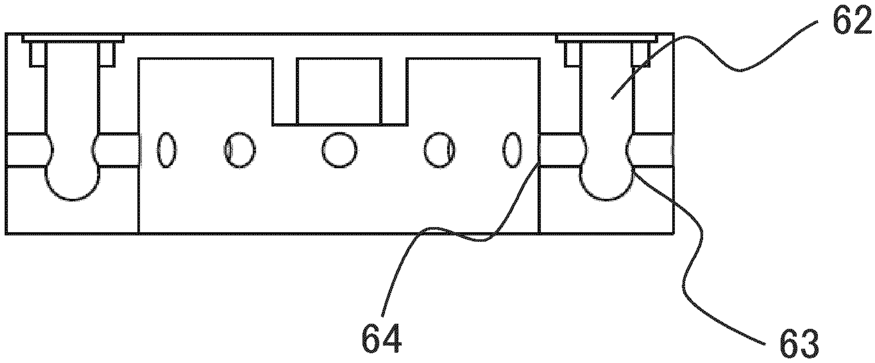

FIG. 4

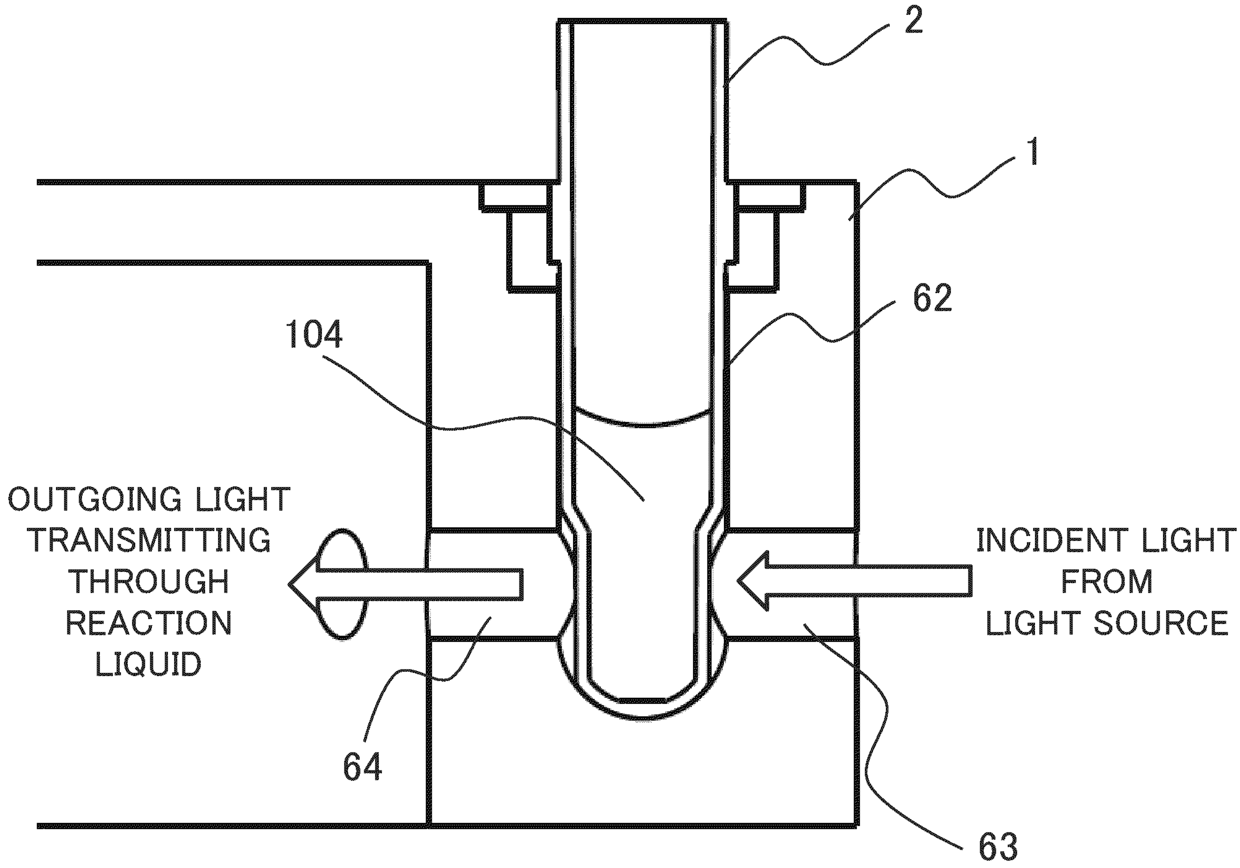
2
1
62
104
OUTGOING LIGHT TRANSMITTING THROUGH REACTION LIQUID
INCIDENT LIGHT FROM LIGHT SOURCE
64
63

FIG. 5

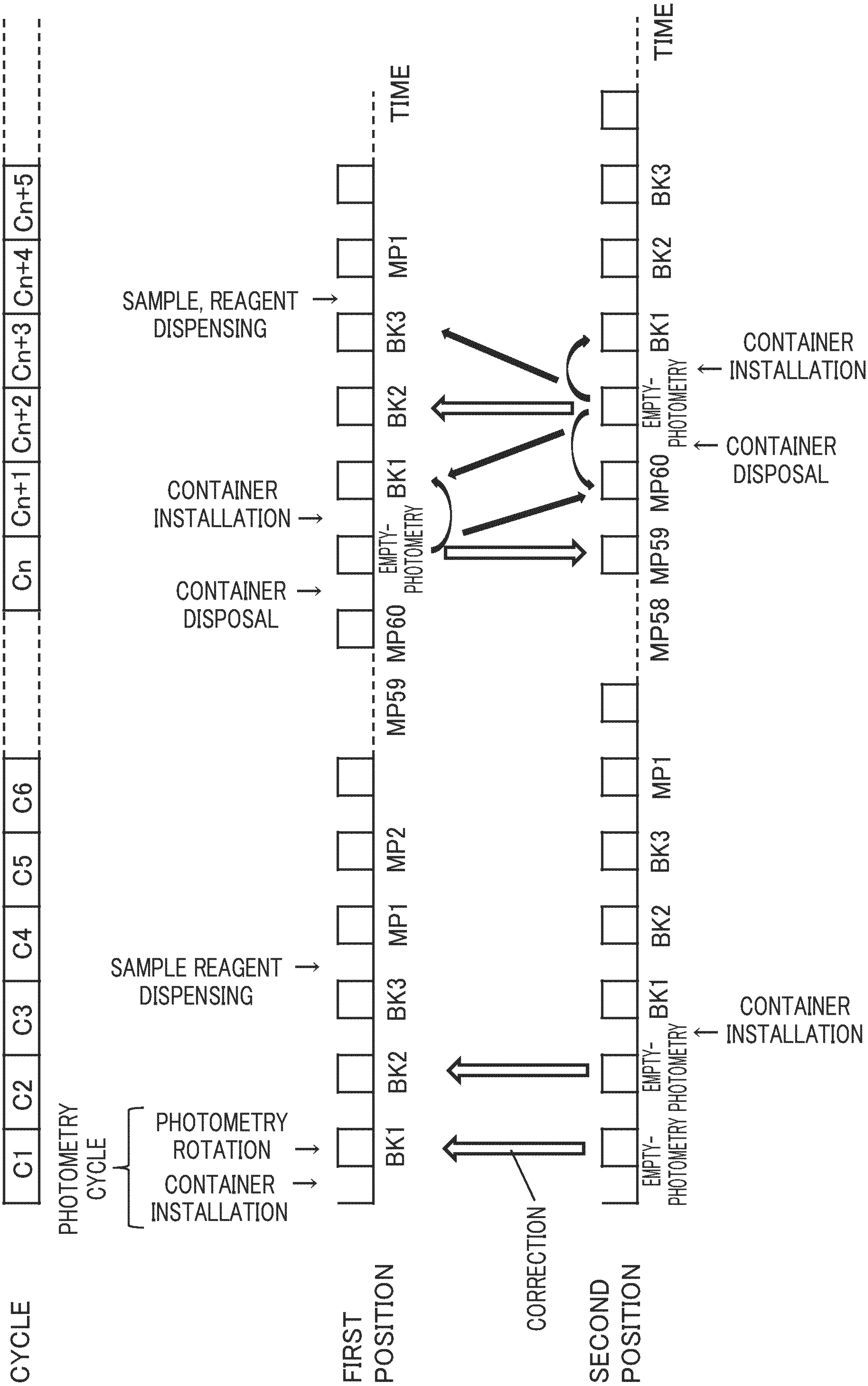
CYCLE
C1
C2
C3
C4
C5
C6
Cn
Cn+1
Cn+2
Cn+3
Cn+4
Cn+5
PHOTOMETRY CYCLE
PHOTOMETRY ROTATION
CONTAINER INSTALLATION
SAMPLE REAGENT DISPENSING
CONTAINER DISPOSAL
CONTAINER INSTALLATION
SAMPLE, REAGENT DISPENSING
FIRST POSITION
BK1
BK2
BK3
MP1
MP2
MP59
MP60
EMPTY-PHOTOMETRY
TIME
CORRECTION
SECOND POSITION
EMPTY-PHOTOMETRY
EMPTY-PHOTOMETRY
PHOTOMETRY
MP58
MP59
MP60
CONTAINER INSTALLATION
CONTAINER DISPOSAL
TIME

FIG. 6

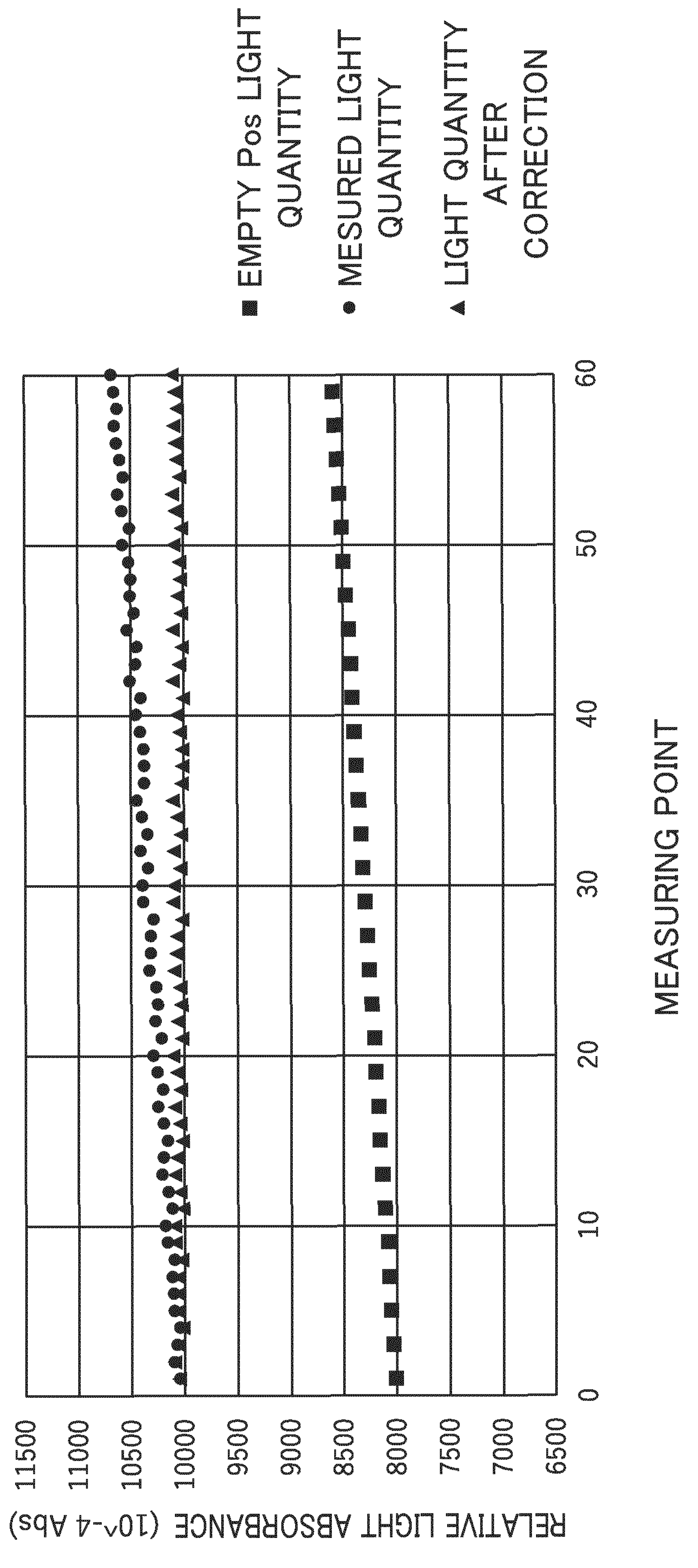
■ EMPTY Pos LIGHT QUANTITY
● MESURED LIGHT QUANTITY
▲ LIGHT QUANTITY AFTER CORRECTION
RELATIVE LIGHT ABSORBANCE (10^-4 Abs)
11500
11000
10500
10000
9500
9000
8500
8000
7500
7000
6500
0
10
20
30
40
50
60
MEASURING POINT

## INTERNATIONAL SEARCH REPORT

International application No.
**PCT/JP2023/026449**

**A. CLASSIFICATION OF SUBJECT MATTER**

***G01N 21/75***(2006.01)i; ***G01N 35/02***(2006.01)i
FI: G01N21/75 Z; G01N35/02 G

According to International Patent Classification (IPC) or to both national classification and IPC

**B. FIELDS SEARCHED**

Minimum documentation searched (classification system followed by classification symbols)

G01N21/00-21/958; G01N35/00-35/10: G01N33/48-33/98

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2007-322246 A (OLYMPUS CORP) 13 December 2007 (2007-12-13)<br>paragraphs [0015]-[0032], fig. 1 | 1, 5-9<br>2-4 |
| Y<br>A | JP 54-32387 A (HITACHI LTD) 09 March 1979 (1979-03-09)<br>claims, p. 2, lower right column, line 5 to p. 3, lower left column, line 15, p. 4, upper right column, line 7 to lower left column, line 14, fig. 1 | 1, 5-9<br>2-4 |
| Y<br>A | WO 2019/073649 A1 (HITACHI HIGH-TECHNOLOGIES CORPORATION) 18 April 2019 (2019-04-18)<br>paragraphs [0022]-[0062], fig. 3 | 1, 5-9<br>2-4 |
| Y<br>A | JP 2004-101290 A (FUJI KIKI KOGYO KK) 02 April 2004 (2004-04-02)<br>paragraph [0026] | 1, 5-9<br>2-4 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/026449

C. DOCUMENTS CONSIDERED TO BE RELEVANT

| Category* | Citation of document, with indication, where appropriate, of the relevant passages | Relevant to claim No. |
|---|---|---|
| Y | US 5314825 A (SCHIAPPARELLI BIOSYSTEMS, INC.) 24 May 1994 (1994-05-24) abstract, column 5, lines 56-66 | 1, 5-9 |
| A | | 2-4 |

Form PCT/ISA/210 (second sheet) (January 2015)

**INTERNATIONAL SEARCH REPORT**
**Information on patent family members**

International application No.
**PCT/JP2023/026449**

| Patent document cited in search report | Publication date (day/month/year) | Patent family member(s) | Publication date (day/month/year) |
|---|---|---|---|
| JP 2007-322246 A | 13 December 2007 | (Family: none) | |
| JP 54-32387 A | 09 March 1979 | (Family: none) | |
| WO 2019/073649 A1 | 18 April 2019 | EP 3696549 A1<br>paragraphs [0022]-[0062], fig. 3<br>US 2020/0209265 A1<br>CN 111201440 A | |
| JP 2004-101290 A | 02 April 2004 | (Family: none) | |
| US 5314825 A | 24 May 1994 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007322246 A